# EUROPEAN PATENT SPECIFICATION

(11) **EP 1 756 222 B1**
(45) Date of publication and mention of the grant of the patent: **24.11.2010**
(21) Application number: 05746806.8
(22) Date of filing: 26.04.2005
(51) Int. Cl.: C08L 67/02

(54) **APPARATUS COMPRISING POLY(CYCLOHEXANEDIMETHANOL TEREPHTHALATE) AND PROCESS THEREFOR**
VORRICHTUNG MIT POLY(CYCLOHEXANDIMETHANOL TEREPHTHALAT) UND VERFAHREN DAFÜR
APPAREIL CONTENANT DU POLY(CYCLOHEXANEDIMETHANOL TEREPHTALATE) ET PROCEDE ASSOCIE

(30) Priority: 28.04.2004 US 565916 P
(43) Date of publication of application: 28.02.2007
(73) Proprietor: E.I. DU PONT DE NEMOURS AND COMPANY, Wilmington, DE 19898 (US)
(72) Inventor: BRENNAN, James, F., Newark, Delaware 19711 (US)
(74) Representative: Heinemann, Monica
(86) International application number: PCT/US2005/014316
(87) International publication number: WO 2005/105920

(56) References cited:
- EP-A- 0 411 136
- US-A- 4 125 571
- US-A- 4 225 688
- US-A- 4 814 426
- PATENT ABSTRACTS OF JAPAN vol. 2000, no. 11, 3 January 2001 (2001-01-03) & JP 2000 230114 A (TORAY IND INC), 22 August 2000 (2000-08-22)

## Description

### FIELD OF THE INVENTION

An apparatus comprises a composition comprising a blend of poly(1,4-cyclohexanedimethanol terephthalate) and a minor amount of poly(1,4-butylene terephthalate), the blend being in contact with and adhered to a second organic polymeric material. The apparatus is made by molding the blend into a shaped part and then bringing the shaped part into contact with the second organic polymers.

### TECHNICAL BACKGROUND

Many different types of organic polymers are used commercially to form a myriad of useful articles. In some cases advantageous properties or part formation methods are possessed by a combination of two or more polymeric compositions being present in an apparatus.

One type of organic polymer useful for forming parts is a thermoplastic, and one type of useful thermoplastic is a polyester. Many different polyesters are used commercially for forming parts. One of these is poly(1,4-cyclohexyldimethanol terephthalate) (PCT) which is a semicrystalline polymer with a relatively high melting point. However when PCT is melt molded, it tends to crystallize relatively slowly, a disadvantage, so materials which act as crystallization promoters, usually plasticizers, are commonly added to the PCT in small quantities to aid in the molding operation.

It has now been found that the amount of plasticizer in PCT formulations can be reduced or eliminated by adding minor amounts of poly(1,4-butylene terephthalate) (PBT) to the PCT compositions, and that when this is done the adhesion of the PCT composition to other organic polymeric materials is often improved.

The use of PBT in PCT compositions is known, see for instance Research Disclosure 306055 and European Patent Application 273148. However, none of these references suggests that such compositions may have improved adhesion to other organic polymeric materials.

### SUMMARY OF THE INVENTION

Described herein is an apparatus, comprising:
(a) a first composition comprising poly(1,4-cyclohexanedimethanol terephthalate) and about 0.5 to about 20 weight percent of poly(1,4-butylene terephthalate), wherein said weight percent is based on the amount of said poly(1,4-cyclohexanedimethanol terephthalate) present in said first composition;
(b) a second composition comprising an organic polymeric material;
and provided that a first surface of said first composition is in contact with a second surface of said second composition.

This invention also concerns a process for making an apparatus, comprising, forming a first composition into a shaped part, then contacting at least a portion of said shaped part with a second composition which comprises an organic polymeric material so that said second composition adheres to said first composition, wherein the improvement comprises, said first composition comprises poly(1,4-cyclohexanedimethanol terephthalate) and about 0.5 to about 20 weight percent of poly(1,4-butylene terephthalate), wherein said weight percent is based on the amount of said poly(1,4-cyclohexanedimethanol terephthalate) present in said first composition.

### DETAILS OF THE INVENTION

Herein certain terms are used, and they are defined below.

By "poly(1,4-cyclohexanedimethanol terephthalate)" (PCT) is meant a polyester formed from a diol and a dicarboxylic acid. At least about 80 mole percent, more preferably at least about 90 mole percent, and especially preferably all of the diol repeat units are derived from 1,4-cyclohexanedimethanol and are of the formula

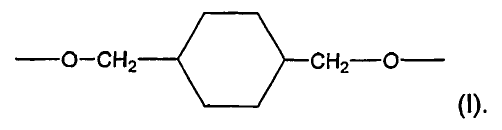

At least about 80 mole percent, more preferably at least about 90 mole percent, and especially preferably all of the dicarboxylic acid repeat units are derived from terephthalic acid and are of the formula 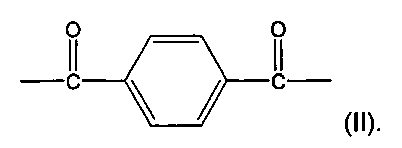 The PCT may also contain up to 10 mole percent [based on the total amount of (I) and (II) present] of one or more repeat unit derived from hydroxycarboxylic acids, although it is preferred that no such repeat unit be present. One particular preferred PCT contains (I) as the diol repeat unit, (II) is 95 mole percent of dicarboxylic acid repeat unit and the other 5 mole percent of the dicarboxylic repeat unit is derived from isophthalic acid, and no hydroxycarboxylic acid is present.

By "poly(1,4-butylene terephthalate" (PBT) is meant a polyester formed from a diol and a dicarboxylic acid. At least about 80 mole percent, more preferably at least about 90 mole percent, and especially preferably all of the diol repeat units are derived from 1,4-butanediol and are of the formula

-O(CH₂)₄O- (III).

At least about 80 mole percent, more preferably at least about 90 mole percent, and especially preferably all of the dicarboxylic acid repeat units are derived from terephthalic acid and are of formula (II).

Both PCT and PBT are available commercially. For example PCT is available as Thermx® thermoplastics, and PBT is available under the tradename Crastin® PBT, both from E. I. DuPont de Nemours & Co., Inc, Wilmington, DE 19898 USA.

By surfaces being "in contact" is meant the usual meaning that they are contacting each other. Preferably there is enough adhesion at the interface of the two surfaces so that this contact is maintained through normal usage of the apparatus. In contact also includes cases in which a layer of adhesive (not tape) is applied so that it is between the two surfaces and helps adhere them (keep them in contact). However it is preferred that an adhesive layer not be used.

By a "shaped part" is meant a part which is three dimensional having definite dimensions and shape.

By an "organic polymeric material" is meant a synthetic organic polymer or a material such as a thermoset material which forms a polymer during the process, for example an epoxy or melamine resin. It includes thermoplastics, thermosets, as well as crosslinkable and uncrosslinked elastomers. A large variety of these types of organic polymeric materials are commercially available, along with, where appropriate, crosslinking agents, catalysts, etc.

The first composition herein, which contains both PCT and PBT may also comprise other materials which are normally found in thermoplastic compositions. Preferably the first composition contains about 1.0 to about 10 weight percent of the PBT, based on the weight of the PCT present. These may be added in conventional amounts. These materials include reinforcing agents, fillers, pigments, antioxidants and other stabilizers, chain extenders, lubricants, crystallization nucleators such as plasticizers, and flame retardants. However in order to improve and/or maintain adhesion between the first and second compositions it is preferred that materials that may at or bloom to the surface such as plasticizers and lubricants be kept to a minimum. For example in one preferred form plasticizers are not present in the first composition. Specific useful materials for the first composition include carbon black, TiO₂, glass fiber, glass flake, milled glass fiber, carbon fiber, polyethylene wax (in minimum amounts as a lubricant), clay, talc, and wollastonite.

The first composition can be made by the usual method for making thermoplastic compositions. The polymers and other ingredients may be dry mixed and then put through a melt mixer such as a single- or twin-screw extruder or a melt kneader. Variations of this type of procedure are well known in the art.

The first composition can be formed into a shaped part by any method known for forming thermoplastics. The most common such method is melt forming, which includes injection molding, extrusion, compression molding, blow molding thermoforming, and rotomolding. The shaped part may be (further) shaped by mechanical methods such as machining. The shaped part may contain one or more inserts, be (partially) foamed, contain internal voids, etc., or any combination of these.

The first composition herein, which comprises poly(1,4-cyclohexanedimethanol terephthalate) and about 0.5 to about 20 weight percent of poly(1,4-butylene terephthalate), wherein said weight percent is based on the amount of said poly(1,4-cyclohexanedimethanol terephthalate) present in said first composition is also useful (by itself, that is with or without the second composition) in applications where low outgassing of the polymeric composition is desired, for example in reflectors of various types, and in electrical and electronic apparatuses which also comprise electrical contacts, such as switches and connectors. This is particularly true when the first composition contains lower amounts of plasticizers, and especially when the first composition contains no plasticizers.

The second composition contains one or more organic polymeric materials, as defined above. In addition it may comprise one or materials normally found in such organic polymeric compositions, such as those outlined above for the first composition. In addition if it is a thermosetting (crosslinkable) material it may also contain crosslinking agents, crosslinking catalysts, and other materials specifically related to crosslinking reactions. Specific types of organic polymeric materials useful in the second composition include epoxy resins, phenolic resins, melamine resins, silicone rubber, EPDM or EP rubber, thermoplastic elastomer, and fluorinated thermoplastics or rubbers. Preferred organic polymeric materials are silicone rubbers, and epoxy resins.

The second composition can be made by standard methods in the art, which depend mostly on what type(s) of polymeric organic materials are used. If they are thermoplastics they can be made by the same methods described above for the first composition. If they are elastomers standard elastomer mixing techniques may be used, such as using a Banbury mixer or a kneader and/or a rubber mill. If they are a thermoset, standard techniques for making thermoset compositions, such as the use of various liquid mixing apparatus can be used.

The first and second compositions may be brought into contact, and the apparatus formed, by a variety of methods, depending for example on the desired shape of the apparatus and the relative positions of the first and second compositions, as well as the nature of the second composition. For example, the first composition may be a housing for an electrical or electronic part such as an ignition coil, and the electronic or electrical part may be inserted into the first composition housing and then an epoxy resin (second) composition poured into the housing and allowed to cure (crosslink), thereby contacting the housing and encapsulating the electrical or electronic part.

In another instance the first composition shaped part may have a groove or other similar indentation on one surface for an elastomeric gasket or seal. The shaped part may be placed in an injection or compression mold and an elastomer (thermoplastic or thermoset) may be injected into the mold cavity and fill the groove or other indentation, thereby forming a seal or gasket. If the elastomer is meant to be crosslinked, this may be done in the same operation. A similar operation may be done to encapsulate an article in a first composition housing, using an elastomer, thermoplastic or thermoset resin. This particular type of apparatus with such a seal or gasket is useful for example for an electrical connector where water intrusion is possible and undesirable, for example electrical connectors for automotive applications.

The second composition may be extruded onto a preshaped extrusion of the first composition, or the two compositions may be coextruded so that they are contacting one another (by definition herein, coextrusion is considered forming the first composition first and then contacting with the second composition, although it is preferred that the first composition be made into a shaped part before contacting with the second composition).

In the Examples, all parts are parts by weight. The following ingredients are used in the Examples:
Americhem/® 1859 R3 - a concentrate of 40% carbon black in PET copolyester from Americhem, Inc., Cuyahoga Fall, OH 44221, USA
Araldite® ECN1299 epoxy resin, Ciba Specialty Chemicals, Tarrytown, NY 10591 USA.
glass fiber - PPG 3563 available from PPG Industries, Pittsburgh, PA 15272 USA.
Irganox® 1010 - antioxidant available from Ciba Specialty Chemicals, Tarrytown, NY 10591, USA.
Mica L135 - KMG Minerals, Kings Mountain, NC, USA.
Plasthall® 809 - polyethylene glycol 400 di-2-ethylhexanoate.

### Example 1

Three compositions were prepared by melt blending in a twin screw extruder. Composition A contained no process aid; Composition B contained a standard polyester processing aid as taught by Deyrup (US Patent Re. 32,334). Composition C contained a small amount of PBT as a processing aid. Compositions are shown in Table 1:

**Table 1**

| COMPOSITION | A | B | C |
|---|---|---|---|
| INGREDIENT | | | |
| | | | |
| PCT | 56.1 | 53.2 | 51.1 |
| ARALDITE® ECN1299 | 1.0 | 1.0 | 1.0 |
| IRGANOX® 1010 | 0.4 | 0.4 | 0.4 |
| AMERICHEM® 18589 R3 | 2.5 | 2.5 | 2.5 |
| PPG 3563 | 40.0 | 40.0 | 40.0 |
| PLASTHALL® 809 | 0.0 | 2.9 | 0.0 |
| PBT | 0.0 | 0.0 | 5.0 |

Differential Scanning Calorimetry heating past melting point and cooling at 10°C/min, and then reheating, gave the following transition points, as shown in Table 2 in °C.

**Table 2**

| Composition | A | B | C |
|---|---|---|---|
| | | | |
| Cold Crystallization temp. | 122.1 | 99.8 | 106.0 |
| Melting temp | 287.4 | 280.2 | 280.6 |
| Freezing temp | 245.4 | 247.6 | 249.2 |

The cold crystallization temperature is a good indication of the mold temperature required to get a highly crystalline part. In this case the required mold temperature for Composition A would exclude use of water heated molds (limited to ∼110 C). Composition C had the highest freezing point of the three compositions. This indicates it would solidify in the mold faster than the other two compositions. Both of these measurements indicate that molding behavior of Composition C would be similar to that of Composition B and improved over that of composition A. Melting point depression for Composition C was similar to that of Composition B.

The three compositions were tested for adhesion to a thermosetting silicone resin, GE LIM8040. This test was designed to simulate a process in which a silicone gasket is molded in place on a thermoplastic part. In this test five tensile bars (dimensions according to ASTM test D256, type A) of each composition were cut in half. A circular hole was cut in Nitto #903UL fluorocarbon tape and the tape was applied to each half bar. The (lack of) tape defined a hole 0.64 cm in diameter and 0.08 mm deep. Parts A and B of the silicone adhesive were mixed per the manufacturers direction. Each hole was filled with adhesive, the two halves of the bar were clamped together and the bars were then cured for one h at 180°C. After cooling (overnight) the bars were pulled in an Instron® machine using a cross-head speed of 0.51 cm/min. to determine the adhesive strength. Results are given in Table 3.

**Table 3**

| Composition | A | B | C |
|---|---|---|---|
| | | | |
| Peak load (kg) | 20.28 | 1.84 | 10.10 |
| Standard deviation | 1.62 | 1.73 | 4.17 |

This clearly shows the disadvantage of using the standard process aid in applications requiring adhesion, and Composition C with PBT as process aid showed good adhesive strength.

### Example 2

Three compositions were prepared by melt blending in a twin screw extruder. Composition D contained no process aid; Composition E contained a standard polyester processing aid. Composition F contained a small amount of PBT as a processing aid. Compositions are shown Table 4below:

**Table 4**

| COMPOSITION | D | E | F |
|---|---|---|---|
| INGREDIENT | | | |
| PCT | 66.1 | 63.1 | 61.1 |
| MICA L135 | 5.0 | 5.0 | 5.0 |
| ARALDITE® ECN1299 | 1.0 | 1.0 | 1.0 |
| IRGANOX® 1010 | 0.4 | 0.4 | 0.4 |
| AMERICHEM® 18589 R3 | 2.5 | 2.5 | 2.5 |
| PPG 3563 | 25.0 | 25.0 | 25.0 |
| PLASTHALL® 809 | 0.0 | 3.0 | 0.0 |
| PBT | 0.0 | 0.0 | 5.0 |

The compositions were tested for silicone adhesion as in Example 1 and the results are shown in Table 5.

**Table 5**

| | A | B | C |
|---|---|---|---|
| Peak load (kg) | 15.73 | 10.7 1 | 18.16 |
| Standard deviation | 5.55 | 3.62 | 9.05 |

## Claims

1. An apparatus, comprising:
(a) a first composition comprising poly(1,4-cyclohexanedimethanol terephthalate) and about 0.5 to about 20 weight percent of poly(1,4-butylene terephthalate), wherein said weight percent is based on the amount of said poly(1,4-cyclohexanedimethanol terephthalate) present in said first composition;
(b) a second composition comprising a silicone rubber or an epoxy resin;
provided that a first surface of said first composition is in contact with a second surface of said second composition by extruding or coextruding said second composition onto said surface of said first composition; and further provided that at least 90 mole percent of the diol repeat units in said poly(1,4-butylene terephthalate) are derived from 1,4-butanediol.

2. The apparatus as recited in claim 1 wherein in said poly(1,4-cyclohexanedimethanol terephthalate) at least 90 mole percent of the diol repeat units are derived from 1,4-cyclohexanedimethanol and at least 90 mole percent of the dicarboxylic acid repeat units are derived from terephthalic acid, and wherein in said poly(1,4-butylene terephthalate) at least 90 mole percent of dicarboxylic acid repeat units are derived from terephthalic acid.

3. The apparatus as recited in claim 1 or 2 wherein about 1.0 to about 10 weight percent of said poly(1,4-butylene terephthalate) is present in said first composition.

4. The apparatus as recited in claim 1 wherein in said first composition plasticizers are not present.

5. The apparatus as recited in claim 1 wherein there is a layer of adhesive between said first and second surfaces.

6. A process for making an apparatus, comprising, forming a first composition into a shaped part, then contacting at least a portion of said shaped part with a second composition by extruding or coextruding said second composition onto said surface of said first composition so that said second composition which comprises a silicone rubber or an epoxy resin adheres to said first composition, wherein said first composition comprises poly(1,4-cyclohexanedimethanol terephthalate) and about 0.5 to about 20 weight percent of poly(1,4-butylene terephthalate), wherein said weight percent is based on the amount of said poly(1,4-cyclohexanedimethanol terephthalate) present in said first composition, and further provided that at least 90 mole percent of the diol repeat units in said poly(1,4-butylene terephthalate) are derived from 1,4-butanediol.

7. The process as recited in claim 6 wherein in said poly(1,4-cyclohexanedimethanol terephthalate) at least 90 mole percent of the diol repeat units are derived from 1,4-cyclohexanedimethanol and at least 90 mole percent of the dicarboxylic acid repeat units are derived from terephthalic acid, and wherein in said poly(1,4-butylene terephthalate) at least 90 mole percent of the diol repeat units are derived from 1,4-butanediol and at least 90 mole percent of dicarboxylic acid repeat units are derived from terephthalic acid.

8. The process as recited in claim 6 wherein about 1.0 to about 10 weight percent of said poly(1,4-butylene terephthalate) is present in said first composition.

9. The process as recited in claim 6 wherein in said first composition plasticizers are not present.

10. The process as recited in claim 6 comprising the additional step of applying a layer of adhesive between said first and second compositions.

## Patentansprüche

1. Vorrichtung umfassend
(a) eine erste Zusammensetzung umfassend Poly(1,4-cyclohexandimethanolterephthalat) und etwa 0,5 bis etwa 20 Gewichtsprozent Poly(1,4-butylenterephthalat), wobei der Gewichtsprozentsatz auf die Menge des in der ersten Zusammensetzung vorliegenden Poly(1,4-cyclohexandimethanolterephthalats) bezogen ist;
(b) eine zweite Zusammensetzung umfassend einen Siliconkautschuk oder ein Epoxidharz;
vorausgesetzt, dass eine erste Oberfläche der ersten Zusammensetzung sich in Kontakt mit einer zweiten Oberfläche der zweiten Zusammensetzung durch Extrudieren oder Coextrudieren der zweiten Zusammensetzung auf die Oberfläche der ersten Zusammensetzung befindet; und des Weiteren vorausgesetzt, dass mindestens 90 Molprozent der Diolwiederholungseinheiten in dem Poly(1,4-butylenterephthalat) von 1,4-Butandiol abgeleitet sind.

2. Vorrichtung wie in Anspruch 1 aufgeführt, wobei in dem Poly(1,4-cyclohexandimethanolterephthalat) mindestens 90 Molprozent der Diolwiederholungseinheiten von 1,4-Cyclohexandimethanol abgeleitet sind und mindestens 90 Molprozent der Dicarbonsäurewiederholungseinheiten von Terephthalsäure abgeleitet sind, und wobei in dem Poly(1,4-butylenterephthalat) mindestens 90 Molprozent Dicarbonsäurcwicdcrholungscinhcitcn von Terephthalsäure abgeleitet sind.

3. Vorrichtung wie in Anspruch 1 oder 2 aufgeführt, wobei etwa 1,0 bis etwa 10 Gewichtsprozent des Poly(1,4-butylenterephthatats) in der Zusammensetzung vorliegen.

4. Vorrichtung wie in Anspruch 1 aufgeführt, wobei in der ersten Zusammensetzung Weichmacher nicht vorliegen.

5. Vorrichtung wie in Anspruch 1 aufgerührt, wobei sich eine Schicht Klebstoff zwischen den ersten und zweiten Oberflächen befindet.

6. Verfahren zum Herstellen einer Vorrichtung umfassend das Formen einer ersten Zusammensetzung zu einem gestalteten Teil, daraufhin das Kontaktieren mindestens eines Abschnitts des gestalteten Teils mit einer zweiten Zusammensetzung durch Extrudieren oder Coextrudieren der zweiten Zusammensetzung auf die Oberfläche der ersten Zusammensetzung, so dass die zweite Zusammensetzung, die einen Siliconkautschuk oder ein Epoxidharz umfasst, an der ersten Zusammensetzung anhaftet, wobei die erste Zusammensetzung Poly(1,4-cyclohexandimethanolterephthalat) und etwa 0,5 bis etwa 20 Gewichtsprozent Poly(1,4-butylenterephthalat) umfasst, wobei der Gewichtsprozentsatz sich auf die Menge des Poly(1,4-cyclohexandimethanolterephthalats), die in der ersten Zusammensetzung vorliegt, bezieht, und des Weiteren vorausgesetzt, dass mindestens 90 Molprozent der Diolwiederholungseinheiten in dem Poly(1,4-butylenterephthalat) von 1,4-Butandiol abgeleitet sind.

7. Verfahren wie in Anspruch 6 aufgeführt, wobei und wobei in dem Poly(1,4-cyclohexandimethanolterephthalat) mindestens 90 Molprozent der Diolwiederholungseinheiten von 1,4-Cyclohexandimethanol abgeleitet sind und mindestens 90 Molprozent der Dicarbonsäurewiederholungseinheiten von Terephthalsäure abgeleitet sind und wobei in dem Poly(1,4-butylenterephthalal) mindestens 90 Molprozent der Diolwiederholungseinheiten von 1,4-Butandiol abgeleitet sind und mindestens 90 Polprozent der Diearbonsäurewiederholungseinheiten von Terephthalsäure abgeleitet sind.

8. Verfahren wie in Anspruch 6 aufgeführt, wobei etwa 1,0 bis etwa 10 Gewichtsprozent des Poly(1,4-butylenterephthalats) in der ersten Zusammensetzung vorliegen.

9. Verfahren wie in Anspruch 6 aufgeführt, wobei in der ersten Zusammensetzung Weichmacher nicht vorliegen.

10. Verfahren wie in Anspruch 6 aufgeführt, umfassend den zusätzlichen Schritt des Einbringens einer Schicht Klebstoff zwischen die ersten und zweiten Zusammensetzungen.

## Revendications

1. Appareil, comprenant :
(a) une première composition comprenant du poly(téréphtalate de 1,4-cyclohexanediméthanol) et environ 0,5 à environ 20pour-cent en poids de poly(téréphtalate de 1,4-butylène), dans laquelle ledit pourcentage en poids est basé sur la quantité dudit poly(téréphtalate de 1,4-cyclohexanediméthanol) présent dans ladite première composition ;
(b) une seconde composition comprenant un caoutchouc de silicone ou une résine époxy ;
à condition qu'une première surface de ladite première composition soit mise en contact avec une seconde surface de ladite seconde composition par extrusion ou co-extrusion de ladite seconde composition sur ladite surface de ladite première composition ; et en outre à condition qu'au moins 90 pour-cent en moles des motifs de répétition diol dans ledit poly(téréphtalate de 1,4-butylène) soient dérivés de 1,4-butanediol.

2. Appareil tel qu'énoncé selon la revendication 1, dans lequel dans ledit poly(téréphtalate de 1,4-cyclohexanediméthanol) au moins 90 pour-cent en moles des motifs de répétition diol sont dérivés de 1,4-cyclohexanediméthanol et au moins 90 pour-cent en moles des motifs de répétition acide dicarboxylique sont dérivés d'acide téréphtalique et dans lequel dans ledit poly(téréphtalate de 1,4-butylène) au moins 90 pour-cent en moles des motifs de répétition acide dicarboxylique sont dérivés de l'acide téréphtalique.

3. Appareil tel qu'énoncé selon la revendication 1 ou 2, dans lequel environ 1,0 à environ 10 pour-cent en poids dudit poly(téréphtalate de 1,4-butylène) est présent dans ladite première composition.

4. Appareil tel qu'énoncé selon la revendication 1, dans lequel dans ladite première composition des agents plastifiants ne sont pas présents.

5. Appareil tel qu'énoncé selon la revendication 1, dans lequel il existe une couche d'adhésif entre ladite première et seconde surfaces.

6. Procédé de fabrication d'un appareil, comprenant, le formage d'une première composition en une partie profilée, puis la mise en contact d'au moins une partie de ladite partie profilée avec une seconde composition par extrusion ou co-extrusion de ladite seconde composition sur ladite surface de ladite première composition afin que ladite seconde composition qui comprend un caoutchouc de silicone ou une résine époxy adhère à ladite première composition, dans lequel ladite première composition comprend du poly(téréphtalate de 1,4-cyclohexanediméthanol) et environ 0,5 à environ 20 pour-cent en poids de poly(téréphtalate de 1,4-butylène), dans lequel ledit pourcentage en poids est basé sur la quantité dudit poly(téréphtalate de 1,4-cyclohexanediméthanol) présent dans ladite première composition, et à condition en outre qu'au moins 90 pour-cent en moles des motifs de répétition diol dans ledit poly(téréphtalate de 1,4-butylène) soient dérivés de 1,4-butanediol.

7. Procédé tel qu'énoncé selon la revendication 6, dans lequel dans ledit poly(téréphtalate de 1,4-cyclohexanediméthanol) au moins 90 pour-cent en moles des motifs de répétition diol sont dérivés de 1,4-cyclohexanediméthanol et au moins 90 pour-cent en moles des motifs de répétition acide dicarboxylique sont dérivés d'acide téréphtalique, et dans lequel dans ledit poly(téréphtalate de 1,4-butylène) au moins 90 pour-cent en moles des motifs de répétition diol sont dérivés de 1,4-butanediol et au moins 90 pour-cent en moles des motifs de répétition acide dicarboxylique sont dérivés d'acide téréphtalique.

8. Procédé tel qu'énoncé selon la revendication 6, dans lequel environ 1,0 à environ 10 pour-cent en poids dudit poly(téréphtalate de 1,4-butylène) est présent dans ladite première composition.

9. Procédé tel qu'énoncé selon la revendication 6, dans lequel dans ladite première composition ne sont pas présents d'agents plastifiants.

10. Procédé tel qu'énoncé selon la revendication 6, comprenant l'étape supplémentaire d'application d'une couche d'adhésif entre ladite première et seconde compositions.
